# EUROPÄISCHE PATENTSCHRIFT

(11) **EP 2 331 610 B1**
(45) Veröffentlichungstag und Bekanntmachung des Hinweises auf die Patenterteilung: **20.04.2016**
(21) Anmeldenummer: 09783395.8
(22) Anmeldetag: 25.09.2009
(51) Int. Cl.: B22F 3/11, B22F 3/26, C08J 5/04, C08J 5/10, C22C 1/08

(54) **METALLISCHES HALBZEUG**
METALLIC SEMI-FINISHED PRODUCT
PRODUIT SEMI-FINI MÉTALLIQUE

(30) Priorität: 26.09.2008 DE 102008042415
(43) Veröffentlichungstag der Anmeldung: 15.06.2011
(73) Patentinhaber: Fraunhofer-Gesellschaft zur Förderung der angewandten Forschung e.V., 80686 München (DE)
(72) Erfinder: Hofenauer, Andreas, 82223 Eichenau (DE); Sorg, Christoph, 80802 München (DE); Markusch, Ralf, 81925 München (DE)
(74) Vertreter: Isarpatent
(86) Internationale Anmeldenummer: PCT/EP2009/062413
(87) Internationale Veröffentlichungsnummer: WO 2010/034792

(56) Entgegenhaltungen:
- EP-A- 1 820 870
- WO-A-2005/049524

## Beschreibung

Gegenstand der Erfindung sind metallische Halbzeuge, metallische Werkstoffe und Verfahren zur Herstellung der Werkstoffe und Halbzeuge sowie deren Verwendungen.

Poröse Sintermetallstrukturen, welche zum Beispiel als Partikelfilter im Abgassystem einer Diesel-Brennkraftmaschine eingebaut sind, sind Stand der Technik. Beispielsweise ist in DE 10128936 A1 eine aus keilförmigen Filtertaschen bestehende poröse Sintermetallstruktur offenbart.

Vom Markt bekannt sind Verfahren zur Sintermetallfilterherstellung, bei welchen eine Streckmetallstützstruktur zum Einsatz kommt. Derartige Streckmetallstrukturen werden nach dem Stand der Technik vor dem Sintervorgang auf unterschiedliche Weise mit Sintermetall angereichert: So ist vom Markt her bekannt, dass aus Sintermetallpulver sowie einem möglichst geringen Anteil an organischen Bindern eine streichfähige Paste hergestellt wird, und diese nach dem Zellradprinzip in das Metallgewebe bzw. Streckmetall eingerakelt wird.

Ebenso ist bekannt, dass aus Sintermetallpulver, organischen Bindern und Lösungsmittel eine fließfähige Paste oder ein Schlicker hergestellt werden kann. Im Anschluss wird das so aufbereitete Sintermetallpulver entweder durch Eintauchen des Metallgewebes oder Streckmetalls in die Paste bzw. Schlicker aufgebracht. Das Metallgewebe bzw. Streckmetall kann auch in einem Gießverfahren mit dem Schlicker übergossen bzw. mit der Paste überdruckt werden. Bei allen Varianten ist ein anschließender Trocknungsvorgang notwendig, um das Lösemittel abdampfen zu lassen und das Sintermetall auf dem Metallgerüst zu fixieren.

Auch ist bekannt, Sintermetallpulver mit Wachs zu vermengen und nach Erwärmung die plastische Masse auf ein Metallgerüst z.B. in Form eines Streckmetallgitters aufzubringen.

Unabhängig vom Beschichtungsverfahren des Metallgewebes bzw. Streckmetalls besteht die Schwierigkeit, die Schichtdicke und die Schichtdichte exakt einzustellen. Zudem erhöht das Steckmetall Gewicht und Kosten der resultierenden Filtermatte. Demnach ist es erstrebenswert, auf ein Gerüstmaterial verzichten zu können, und dennoch eine flächige, definierte und stabile Filtermatte zu erzeugen. In der Patentschrift WO/2006/008222 wird dieses Problem gelöst. Offenbart werden folgende Schritte:
a. Herstellung eines Gemisches aus einem Sintermetallfolie und einem organischen Binder
b. Herstellen einer Folie aus dem Gemisch
c. Strukturierung der Folie
d. Sintern

Bei diesem Verfahren dient als Halbzeug eine Sintermetallfolie, welche im Grünzustand (vor dem Sintern) eine gewisse Eigenfestigkeit aufweist, um in Filterübliche Strukturen überführt zu werden.

Anorganische Füllstoffe haben im Kontext der Papiererzeugung in erster Linie die Funktion der Kostenreduktion und der Eigenschaftsergänzung. Demnach erfährt das Papier durch den Füllstoff eine Modifikation des Eigenschaftsprofils. Üblicherweise werden maximale Füllstoffgehalte von 30 bis 40 Massen-% (SC-, bzw. Dekorpapier) angestrebt.

Einen wichtiger Anwendungsbereich stellen keramische Werkstoffe dar, die aus präkeramischen sinterfähigen Spezialpapieren hergestellt werden. Diese Papiere sind mit präkeramischen (reaktive keramische Phasen ausbildend) bzw. keramischen Füllstoffe von beispielsweise 75 Gew.-% so stark angereichert worden, dass sie thermisch in keramische Werkstoffe umgesetzt werden können. In Offenlegungsschrift DE 103 48 798 A1 werden Papiere beschrieben, welche mit den reaktiven Füllstoffen Silizium und Aluminium angereichert werden. Diese Papiere werden thermisch über Pyrolyse und anschließender Oxidation in keramische Werkstoffe umgesetzt. Dabei reagierten die Füllstoffe mit dem sich bei der Pyrolyse bildenden Kohlenstoff zu keramischen Phasen. Das Ergebnis ist eine Mischkeramik mit den Bestandteilen, Siliziumkarbid, Aluminiumoxid und Mullit. Mit diesem Verfahren können keramische Strukturen und Bauteile realisiert werden.

In Offenlegungsschrift DE 10 2006 022 598 A1 werden Spezialpapiere offenbart, welche anstelle reaktiver Füllstoffe (Si, A1) nicht reaktive, keramische Füllstoffe (z.B. Al₂O₃, ZrO₂, SiC, Si₃N₄, Zeolithe, Alumosilikate) beinhalten, welche über Sinterung verfestigt werden. Diese Offenbarungen haben keramische Werkstoffe nach dem Sintervorgang gemeinsam zum Ziel.

Die Herstellung von Keramiken aus Papier, das mit keramischen Bestandteilen befüllt ist, wird auch in US 4,421,599 offenbart.

Die EP 1 820 870 A1 beschreibt einen Metall-basierten Kohlenstofffaser-Verbundwerkstoff, der mit den üblichen billigen Materialien und weniger Energie als in einem Schmelzverfahren hergestellt werden kann.

Zur Herstellung poröser dünnwandiger Sintermetallstrukturen auf Basis flächiger Halbzeuge werden nach dem Stand der Technik Sintermetallfolien eingesetzt. Nachteilig bei der Herstellung von Sintermetallfolien ist die Notwendigkeit, dass organische leichtflüchtige Lösungsmittel für den Folienherstellungsprozess zu Einsatz kommen, was einen Ex-Schutz (Explosionsgefahr, Arbeitssicherheit) erfordert und die Prozesskosten erheblich erhöht. Zudem ist nachteilig, dass Sintermetallfolien aufgrund fehlender Faserarmierung eine geringe Steifigkeit und Stabilität aufweisen, was die Realisierung komplexer Geometrien erschwert. Demnach wäre es von Vorteil, ein Verfahren für ein flächiges, homogenes und stabiles Sintermetallhalbzeug zu entwickeln, welches auf wässriger Basis hergestellt wird und zudem organische Fasern z.B. in Form von Zellstoff als Faserarmierung enthält.

Der Erfindung liegt das Problem zugrunde, effektive Verfahren und Mittel zur Herstellung von metallischen Metallstrukturen bereitzustellen, die die oben beschriebenen Nachteile überwinden. Wünschenswert wäre insbesondere die Entwicklung eines sintermetallangereicherten Papiers, welches in papierüblichen Verfahren wässrig mittels Papiermaschine in papierüblichen Dimensionen kostengünstig hergestellt werden kann, papierüblich geformt und gegebenenfalls mittels thermischer Behandlung in metallische Werkstoffe überführt werden kann.

Das der Erfindung zugrunde liegende Problem wird überraschenderweise gelöst durch Halbzeuge, Verfahren zu deren Herstellung, Verwendungen und metallische Werkstoffe gemäß den Patentansprüchen.

Erfindungsgemäß wird ein flächiges metallangereichertes Halbzeug als metallangereichertes Papiers bereitgestellt. Dieses kann überraschenderweise wässrig in papierüblichen Verfahren mittels Papiermaschine in papierüblichen Dimensionen hergestellt werden. Der metallische Füllstoff kann während des Papierherstellungsprozesses zugeführt werden. Es ist nicht erforderlich, flüchtige organische Lösungsmittel einzusetzen. Durch die Nutzung papiertechnologischer Verfahrenstechnik kann in Relation zu anderen Verfahren, wie zum Beispiel Foliengießen, erheblich schneller und in erheblich größerem Umfang ein derartiges metallisches Halbzeug hergestellt werden. Darüber hinaus wirken die beim Papierherstellungsprozess eingesetzten Zellstofffasern als Faserarmierung im resultierenden flächigen Halbzeug, so dass dieses wesentlich stabiler und flexibler sind als beispielsweise Sintermetallfolien, welche mittels Foliengießen hergestellt werden. Das erfindungsgemäße Papier kann mittels papierüblicher Verfahren z.B. zu komplexen, filterrelevanten Geometrien geformt und gegebenenfalls thermisch in einen metallischen Werkstoff überführt werden.

Gegenstand der Erfindung ist ein Halbzeug, enthaltend
(a) organische Faserstoffe,
(b) Bindemittel,
(c) 15 bis 90 Vol.-% metallische Füllstoffe und
(d) 0 bis 15 Vol.-% nicht metallische anorganische Füllstoffe,
wobei der Gesamtgehalt der Füllstoffe (c) und (d) zusammen nicht mehr als 90 Vol-% des Halbzeugs beträgt, wobei sich alle Volumenangaben auf das Feststoffvolumen des Halbzeugs beziehen und wobei das Halbzeug mindestens ein Metall der 4., 5. und 6. Periode des Periodensystems enthält, gegebenenfalls in Form von Legierungen oder Gemischen.

Die Mengenangaben sind als Feststoffvolumenanteil angegeben. Damit ist der Anteil gemeint, welcher das Volumen des eingesetzten Füllstoffes an dem gesamten Volumen aller eingesetzten Feststoffe bestehend aus Füllstoff, Zellstoff, Latex und weitere organische Binder und oder Polymere hat. Das Volumen der Poren wird nicht betrachtet. Damit erfährt der Anspruch eine Unabhängigkeit vom spezifischen Gewicht der eingesetzten Füllstoffe sowie vom Verdichtungsgrad des Papiers. Die Angabe der Anteile in Vol.-% ist hier von Vorteil, da auf diese Art besser beschrieben werden kann, in welchem Maße das Halbzeug mit Metallen befüllt ist. Ein hoher Volumenanteil an Metallen vereinfacht im Allgemeinen die Sinterung, weil die Metallpartikel in Kontakt stehen.

Die Erfindung erlaubt es, ein Halbzeug in einem Papierherstellungsprozess mit metallischen Füllstoffen hochgradig anzureichern. Das Halbzeug ist in erster Linie durch die eingesetzten metallischen Füllstoffe geprägt. Es wird ein flächiges metallisches Halbzeug erhalten, welches nach der Formgebung im unverfestigten Zustand oder thermisch verfestigt zum Einsatz kommen kann. Weitere nicht metallische Füllstoffe können zusätzlich, jedoch nicht in einem den Charakter des Halbzeugs signifikant beeinflussenden Umfang, enthalten sein. Es sind bevorzugt erheblich weniger nicht metallische Füllstoffe als metallische Füllstoffe enthalten. Beispielweise kommen auf 100 Teile metallische Füllstoffe nicht mehr als 20, 10 oder 5 Teile nicht metallische anorganische Füllstoffe.

In einer Ausführungsform bildet der Faserstoff (a) in dem Halbzeug keine durchgängige Matrix. Bei dieser Ausführungsform ist der Anteil an Faserstoff nicht ausreichend, um eine Matrix zu bilden. Die Füllstoffe werden durch den Binder verbunden. in einer weiteren Ausführungsform ist der Anteil der Metalle so hoch, dass diese sich kontaktieren und eine durchgängige Matrix bilden.

Das erfindungsgemäße Material wird als "Halbzeug" bezeichnet. Dies bedeutet, dass das Metall-haltige Material in einer Form bereitgestellt wird, das weiterverarbeitet werden kann. Dadurch ist jedoch nicht ausgeschlossen, dass das Halbzeug selbst als Gebrauchsgegenstand eingesetzt wird.

In einer weiteren Ausführungsform der Erfindung ist das Halbzeug ein Papier oder eine Pappe. Der Papiercharakter des Halbzeugs nimmt mit dem Anteil der organischen Faserstoffe (a) zu. Überraschenderweise ist das Halbzeug jedoch selbst dann nach üblichen papiertechnischen Verfahren herstellbar und verarbeitbar, wenn der Faserstoffgehalt so niedrig ist, dass nach der üblichen Definition kein Papier vorliegt.

Das erfindungsgemäße Halbzeug ist fest. Es weist nach der Herstellung nur noch einen geringen Wasseranteil auf, beispielsweise weniger als 5, weniger als 1 oder weniger als 0,2 Gew.-%. Es ist bevorzugt ausreichend stabil, um bei üblicher Handhabung und Transport nicht zu zerfallen.

In einer bevorzugten Ausführungsform entsteht bei einer Sinterung des Halbzeugs unter üblichen Bedingungen, beispielsweise bei Temperaturen zwischen 1100 und 1800 °C, insbesondere zwischen 1200 °C und 1700 °C, oder zwischen 1200 und 1600 °C, insbesondere bei 1200, 1300 oder 1600°C, beispielsweise für 10 h, ein metallischer Werkstoff. Ein "metallische Werkstoff" im Sinne der Erfindung ist ein Werkstoff, der einen wesentlichen Anteil an Metallen aufweist, also beispielsweise mindestens 15, 50, 80, 95, 99 oder 100 Gew.-%.

In einer bevorzugten Ausführungsform ist im Halbzeug der Gehalt an metallischen Füllstoffen (c) mindestens 20 Vol.-%, bevorzugt mindestens 50 Vol.-%, besonders bevorzugt mindestens 76 Vol.-% oder mindestens 85 Vol.-%, bezogen auf das Feststoffvolumen des Halbzeugs. Der Gesamtfüllstoffgehalt ist bevorzugt 40-95 Vol.-% oder 70 bis 95 Vol.-%, insbesondere 76 bis 90 Vol.-% bezogen auf das Feststoffvolumen des Halbzeugs. Um dem Halbzeug zunehmend den metallischen Charakter zu verleihen, sind höhere Anteile metallischer Füllstoffe von Vorteil. So ist zum Erreichen einer Sinterfähigkeit eines metallpulverangereicherten Papiers eine ausreichende räumliche Nähe der Sintermetallpartikel notwendig. Diese ist umso mehr gewährleistet, je mehr metallischer Füllstoff im Papier enthalten ist.

Bevorzugt sind mindestens 20 Vol.-%, bevorzugt 35 Vol.-%, besonders bevorzugt 45 Vol.-% oder 55 Vol.-% Metallpulver bezogen auf das Feststoffvolumen enthalten. Da die Metalle eine deutlich höhere Dichte als die organischen Komponenten aufweisen, entspricht dies sehr hohen Anteilen in Gewichts-%. Bei einer Rohdichte eines Sintermetalls beispielsweise von 8 g/cm³ entsprechen diese Feststoffvolumenanteile folgenden Gewichtanteilen bezogen auf Gesamttrockenmasse des Papiers: 10 Vol.-% entspricht rund 37 Gew.-%, 20 Vol.% entspricht rund 57 Gew.-%, 35 Vol.-% entspricht rund 74 Gew.-%, 45 Vol.-% entspricht rund 81 Gew.-% und schließlich 55 Vol.-% entspricht rund 87 Gew.-% bezogen auf Gesamttrockenmasse des metallangereicherten Papiers.

Das Halbzeug enthält mindestens ein Metall der 4., 5. und 6. Periode des Periodensystems, gegebenenfalls in Form von Legierungen oder Gemischen. Der metallische Werkstoff ist beispielsweise ausgewählt aus Eisen, Wolfram, Chrom, Mangan, Molybdän, Nickel, Palladium, Platin, Titan, Vanadium, Niob, Tantal, Kupfer, Silber, Gold, Aluminium, Bronze, Messing, Zinn, Zinnlegierungen, Blei, Bleilegierungen, Zink, Magnesium, Mg-Legierungen, Calcium sowie Mischungen und Legierungen dieser Metalle, wie Stahl oder Edelstahl. In einer bevorzugten Ausführungsform enthält der metallische Füllstoff mindestens ein Edelmetall. Bevorzugt sind insbesondere Metalle, die beim Sintern, beispielsweise bei 1000 bis 2000 °C für 10h, nicht zu Carbiden, Nitriden oder Oxiden reagieren. In einer Ausführungsform ist das Metall kein Silicium und kein Silicium in dem Halbzeug enthalten.

In einer bevorzugten Ausführungsform sind nicht metallische anorganische Füllstoffe keramische Füllstoffe, bevorzugt Carbide, Oxide, Nitride und Boride, Hydroxide, besonders bevorzugt Siliziumcarbid, Borcarbid, Titancarbid, Aluminiumoxid, Zirkoniumoxid, Titandioxid, Siliziumnitrid, Silikate, Alumosilikate, Aluminiumnitrid, Bornitrid und Titanborid enthalten. Grundsätzlich können auch geringe Anteile an Kohlenstoffe, bevorzugt Graphit, Aktivkohle, Ruß, Diamant, Diamantstaub, Fullerenen, Kohlenstoff-Nanotubes oder Kohlenstofffasern enthalten sein, um die Eigenschaften zu modifizieren. Solche reaktiven Zusätze sind jedoch nur dann und nur in Mengen enthalten, die nicht dazu führen, dass das Metall in signifikanten Mengen zu einer Keramik reagiert. In einer bevorzugten Ausführungsform ist daher kein elementarer Kohlenstoff, wie Graphit oder Russ, enthalten.

In einer bevorzugten Ausführungsform ist der Anteil nicht-metallischer Füllstoffe weniger als 10 Vol.-%, bevorzugt weniger als 5 Vol.-% und besonders bevorzugt weniger als 2 Vol.-% bezogen auf das Feststoffvolumen des Halbzeugs.

In einer bevorzugten Ausführungsform liegen das Metall und/oder die weiteren Füllstoffe als Pulver und/oder Fasern, bevorzugt mit einer Partikelgröße und/oder einem Faserdurchmesser von weniger als 200 µm, besonders bevorzugt von weniger als 100 µm oder von weniger als 50 µm vor. Neben dem Einsatz nicht faserförmiger Partikel als Füllstoff können auch faserartige Füllstoffe als sogenannte Faserfüllstoffe zum Einsatz kommen. Der angegebene Füllstoffgehalt umfasst demnach sowohl faserförmige als auch nicht faserförmige Füllstoffe. Der Einsatz von metallischen Kurzfasern kann zum Beispiel in einer resultierenden papierabgeleiteten Sintermetallstruktur dieser eine höhere Festigkeit und/oder höhere Schadenstoleranz verleihen. Je kleiner der repräsentative Partikel- bzw. Faserdurchmesser ist, desto geringer ist bei gegebener Rohdichte die Sedimentationsneigung des Füllstoffes während des Papierherstellungsprozesses. Feinere Partikel können demnach leichter in hohem Umfang mit dem vorgestellten papiertechnologischen Verfahren im Papier angereichert werden. Im Falle des Einsatzes von Sintermetallpartikeln sind erst seit wenigen Jahren Partikelqualitäten im Durchmesserbereich unter 50 µm, sogar unter 30 µm am Markt erhältlich.

In einer bevorzugten Ausführungsform ist der Gehalt an organischen Faserstoffen (a) 2 bis 84,5 Vol.-%, insbesondere 5 bis 50 oder 5 bis 25 Vol.%, bezogen auf das Feststoffvolumen des Halbzeugs.

Der Gehalt an Bindemittel (b) ist 0,5 bis 20 Vol.-%,; bevorzugt 1 bis 15 Vol.-%, oder 2 bis 10 Vol.-%, bezogen auf das Feststoffvolumen des Halbzeugs. In einer bevorzugten Ausführungsform ist das Bindemittel (b) Latex und/oder ein natürliches oder derivatisiertes natürliches Polysaccharid, insbesondere Stärke. Insbesondere Latex erfüllt dabei eine Doppelfunktion. Zum einen erlaubt der Einsatz von Latex (Emulsion vorvernetzter Polymere) beim Papierherstellungsprozess eine starke Flockung des Füllstoffes. Latex bildet als Emulsion sehr feine Tröpfchen mit Durchmessern im Bereich 100-500 nm aus. Dadurch erreicht man mit relativ wenig Wirksubstanz eine hohe effektive Oberfläche des eingesetzten Latex. In Kombination mit der Fähigkeit zur Filmbildung lassen sich durch den Einsatz von Latex sehr große Füllstoffmengen in Kombination mit weiteren Retentionsmitten sehr effektiv flocken, das heißt zu Aggregaten zusammenfügen. In diesem Zusammenhang kann durch den Einsatz geladener Stärke die Flockung gezielt weiter reguliert werden. Durch die starke Flockung wird gewährleistet, dass in dem hoch wässrigen System bei der Papierherstellung der Füllstoff beim Aufbringen des Stoffgemisches auf das Papiersieb von diesem zurückgehalten wird und nicht mit dem Siebwasser verloren geht. Zum anderen erfüllt Latex im fertigen, metallangereicherten Papier die Funktion eines elastischen Binders. Dadurch wird ein Stauben des Papiers (Abtrag von Füllstoff) vermieden. Die Kombination von Zellstofffasern und Latex ermöglicht zudem eine sehr gute Formbarkeit der metallangereicherten Papiers. Bevorzugt ist der Latex eine Polymerdispersion. Als Polymerdispersion bezeichnet man eine kolloidal stabile Dispersion von Polymerpartikeln in einer wässrigen Phase. Der Durchmesser der Polymerpartikel kann zwischen 10 Nanometern bis 5 Mikrometern liegen. Als Latices können beispielsweise Polymerdispersionen auf der Basis von Acrylester-Vinylacetat oder Methylmethacrylat sowie Ethylacrylat oder Styrol-Butadien oder Acyl-Nitril zum Einsatz kommen. Insbesondere haben sich als geladene Latices das Produkt der Marke Styronal 809 (auf Styrol-Butadien-Basis) von dem Hersteller BASF oder das Produkt der Marke Nychem 1562x117 (auf Acryl-Nitril-Basis) der Firma Emerald bewährt.

Erfindungsgemäß können auch natürliche Polysaccharide eingesetzt werden. Unter diesen ist Stärke besonders bevorzugt. Als Stärke kann z.B. Kartoffelstärke, Maisstärke oder Reisstärke zum Einsatz kommen. Weitere geeignete natürliche Polysaccharide sind Xanthan sowie solche aus Guar. Die natürlichen Polysaccharide und die Stärke können nach bekannten Methoden derivatisiert, also chemisch modifiziert, sein.

In einer bevorzugten Ausführungsform sind organische Bindemittel, bevorzugt Phenolharze und/oder anorganische Bindemittel bevorzugt silikatische Binder und oder metallorganische Polymere bevorzugt Silane, Siloxane, Silazane und oder Hybridpolymere, enthalten. Diese Binder können beispielsweise in Kombination mit Latex und/oder natürlichen oder derivatisierten natürlichen Polysacchariden, insbesondere Stärke, eingesetzt werden.

In einer bevorzugten Ausführungsform enthält das Halbzeug als Bindemittel geladenen Latex und/oder natürliches oder derivatisiertes natürliches Polysaccharid, insbesondere Stärke, wobei der geladene Latex oder die geladene Stärke in einer Menge von 0,05-15 Gew.-%, insbesondere bevorzugt in einer Menge von 0,5-10 Gew.-%, bezogen auf das trockene Gesamtgewicht des Halbzeugs, vorliegen. Bevorzugt wird anionischer Latex und/oder kationische Stärke eingesetzt.

In einer bevorzugten Ausführungsform enthält das Halbzeug als Retentionsmittel Polyvinylamin, Polyacrylamid, Polyamidamin, Aluminiumsulfat und/oder Bentonit, bevorzugt in einer Menge von 0,01 bis 7 Gew.-%, besonders bevorzugt von 0,1 bis 2 Gew.-%, bezogen auf das trockene Gesamtgewicht des Halbzeugs. Diese Retentionsmittel können auch in Kombination mit Latex und Stärkte eingesetzt werden.

In einer bevorzugten Ausführungsform enthält das Halbzeug als organischen Faserstoff (a) natürliche Fasern, chemisch modifizierte natürliche Fasern oder synthetische Fasern, insbesondere auf Cellulose-Basis. Geeignet sind beispielsweise Sulfatzellstoff und/oder Sulfitzellstoff und/oder nach thermomechanischem Verfahren (TMP) hergestellter Zellstoff und/oder nach chemo-thermomechanischem Verfahren (CTMP) hergestellter Zellstoff und/oder Baumwolle und/oder Linters, ligno-cellulosehaltige Stoffe und/oder Holzschliff.

In einer bevorzugten Ausführungsform weist das Halbzeug eine Dicke von 50 bis 20000 µm, bevorzugt von 100 bis 1500µm auf.

In einer bevorzugten Ausführungsform sind in dem Halbzeug zusätzlich Benetzungs- und/oder Dispergiermittel, bevorzugt kationische und oder anionisch-stabilisierende Mittel enthalten. Das Benetzungs- und oder Dispergiermittel ist bevorzugt in einer Menge von 0,05 - 5 Gew.-%, insbesondere in einer Menge von 0,1-3 Gew.-%, bezogen auf das trockene Gesamtgewicht des Halbzeugs, enthalten.

In einer bevorzugten Ausführungsform weist das Halbzeug bei der vollständigen Pyrolyse einen Gewichtsverlust von weniger als 50 Gew.-%, bevorzugt weniger als 40 Gew.-%, insbesondere bevorzugt weniger als 30 Gew.-%, oder weniger als 20 Gew.-%, bezogen auf das trockene Gesamtgewicht des Halbzeugs, auf.

In einer bevorzugten Ausführungsform liegt das Halbzeug papiertechnisch geformt vor, bevorzugt als Wellpappe, Waben- oder Rohrstruktur.

In einer bevorzugten Ausführungsform liegt das Halbzeug papiertechnisch geformt in Kombination mit einer metallischen Stützstruktur, bevorzugt in Kombination mit einem Streckmetall oder in Kombination mit einem metallischen Fasergewebe vor, bevorzugt als Wellpappe-, Waben- oder Rohrstruktur.

Gegenstand der Erfindung ist auch die Verwendung eines Halbzeugs gemäß einem oder mehreren der vorhergehenden Ansprüche zur Herstellung eines metallischen Werkstoffes, beispielsweise als Filter für Gase oder Flüssigkeiten, als Katalysatorträger, Katalysator, Wärmetauscher, Barriereschicht, Gehäusekomponente, Porenbrenner oder Papier zur elektromagnetischen Abschirmung.

Gegenstand der Erfindung ist auch ein Verfahren zur Herstellung eines Halbzeugs gemäß mindestens einem der vorhergehenden Ansprüche mit den Schritten:
- Vermischen der Faserstoffe (a), Bindemittel (b) und Füllstoffe (c) und (d) in einem Lösungsmittel, bevorzugt Wasser, zu einem Brei; und
- Verarbeiten des Breis zu einem Halbzeug unter Verwendung einer Papiermaschine oder eines Extrusion- oder Spritzgußverfahrens.

In einer bevorzugten Ausführungsform ist das Halbzeug mit einem Schlicker beschichtet. Der Schlicker umfasst bevorzugt organische Bindemittel und/oder metallische und/oder keramische und/oder kohlenstoffhaltige und/oder ligno-cellulosehaltige Zusatzstoffe in Form von Pulvern und/oder Fasern.

Gegenstand der Erfindung ist auch ein Verfahren zur Herstellung eines metallischen Werkstoffes, wobei ein erfindungsgemäßes Halbzeug gemäß so lange thermisch behandelt wird, bis die organischen Bestandteile entfernt sind. Dies bedeutet beispielsweise, dass der Anteil organischer Bestandteile weniger als 1, 0,2 oder 0,05 Gew.-% ausmacht. Es verbleibt eine weitgehend metallische Matrix. Die Verfahrensführung erfolgt so, dass das Metall nicht oder nur unwesentlich (beispielsweise zu weniger als 10, 5 oder 2%), chemisch reagiert, beispielsweise zu einem Oxid, Nitrid oder Carbid.

Ein weiterer Gegenstand der Erfindung ist ein Verfahren zur Herstellung eines metallischen Werkstoffes unter Verwendung eines erfindungsgemäßen Halbzeugs gekennzeichnet durch mindestens einen der folgenden Schritte:
- Infiltration des Halbzeugs mit organischen Bindemitteln, bevorzugt Phenolharzen, und/oder mit einem anorganischen Binder, bevorzugt mit einem silicatischen Binder, mit anschließender thermische Behandlung bei einer Temperatur bis 300 °C, bevorzugt bis 200 °C, oder
- Infiltration des Halbzeugs mit Hybridpolymeren und oder metallorganischen Polymeren, bevorzugt Silanen, Siloxanen oder Silazanen, mit anschließender thermischen Behandlung bei einer Temperatur bis 300 °C, bevorzugt bis 200 °C, mit anschließender Pyrolyse bei einer Temperatur bis 1600 °C, bevorzugt bis 1200 °C oder bis 800 °C, oder
- Pyrolyse des Halbzeugs bei einer Temperatur bis 1200 °C, bevorzugt bis 800 °C mit anschließender Sinterung bei einer Temperatur bis 1600 °C, bevorzugt bis 1400 °C, besonders bevorzugt bis 1200 °C oder bis 1000 °C, oder
- Pyrolyse des Halbzeugs bei einer Temperatur bis 1200 °C, bevorzugt bis 800 °C mit anschließender Sinterung bei einer Temperatur bis 1600 °C, bevorzugt bis 1400 °C, besonders bevorzugt bis 1200 °C, oder bis 1000 °C mit anschließender Infiltration mit einem Metall, bevorzugt Aluminium, Kupfer oder Silizium, bei einer Temperatur bis 1600 °C, bevorzugt bis 1400 °C.

Das erfindungsgemäße Halbzeug kann auch ein Laminat aus mindestens zwei Schichten sein. sein. In einer besonderen Ausführungsform der Erfindung werden bei der Herstellung des Halbzeugs mindestens zwei erfindungsgemäße Halbzeuge miteinander verbunden. Dabei werden die Schichten flächig übereinander positioniert..

In einer bevorzugten Ausführungsform der Erfindung erfolgt das Verbinden der Schichten während der papiertechnischen Herstellung der einzelnen Halbzeugschichten oder unmittelbar nach der Herstellung einer noch feuchten Schicht. Bevorzugt werden dabei die beiden Halbzeuge im feuchten Zustand bei einer Feuchtigkeit, insbesondere einem Wassergehalt, von mehr als 10 % bevorzugt von mehr als 20 % und besonders bevorzugt von mehr als 40 % Gew.% in einem Gautschprozess miteinander verbunden. Die Bindekräfte bilden sich dann bei dem Trocknen des Laminats aus.

In einer weiteren Ausführungsform der Erfindung werden die mindestens zwei Halbzeuge mit einem Bindemittel verbunden. Vorzugsweise ist das Bindemittel ein organisches Bindemittel, insbesondere Stärke, Latex oder Polyvinylalkohol. Geeignet ist auch ein Hybridpolymer, ein metallorganisches Polymere oder eine Mischung aus den genannten Stoffen. Dabei können die Halbzeugschichten mit dem Bindemittel versehen und verklebt werden. In einer weiteren Ausführungsform enthält das Bindemittel metallische Füllstoffe.

Gegenstand der Erfindung ist auch ein metallischer Werkstoff, erhältlich nach einem erfindungsgemäßen Verfahren. Die erfindungsgemäßen Werkstoffe weisen eine weitgehend metallische Matrix auf Sie sind bevorzugt stabil bei mechanischer Belastung. Sie sind bevorzugt porös, wobei der Anteil der Poren am Volumen des Werkstoffes bevorzugt 20 bis 95% oder besonders bevorzugt 30 bis 70% ausmacht. Die Porengrößen liegen dabei beispielsweise zwischen 1 und 2000 µm, bevorzugt zwischen 30 und 500 µm, bei mindestens 95% oder mindestens 95% der Poren. Bevorzugt liegt die mittlere Porengröße zwischen 1 und 2000 µm, bevorzugt zwischen 30 und 500 µm. Bevorzugt wird bei der thermischen Entfernung der Zellstofffasern eine biomorphe Porengeometrie bzw. Porenstruktur erhalten.

Der erfindungsgemäße Werkstoff enthält einen hohen Anteil Metall oder besteht im wesentlichen aus Metall. Bevorzugt ist ein Metallgehalt von mindestens 60, 75, 90, 95 oder 99 Gew.-%. Der erfindungsgemäße Werkstoff und die Halbzeuge mit hohem Metallgehalt unterscheiden sich damit von den keramischen Werkstoffen und Halbzeugen mit allenfalls niedrigem Metallgehalt aus DE 10 2006 022 598 A1.

Ein weiterer Gegenstand der Erfindung ist die Verwendung des Halbzeugs oder des metallischen Werkstoffes als Filter für Gase oder Flüssigkeiten, als Katalysatorträger, Katalysator, Wärmetauscher, Barriereschicht, Gehäusekomponente, Porenbrenner, Membran, Oberflächenbrenner, thermische Isolierung, Elektrode, Heizrohr, Wärmerohr, Verdampfer, Leichtbaustruktur oder zur Abschirmung von Strahlung, insbesondere Elektrosmog, Röntgenwellen oder Radarwellen.

Gegenstand der Erfindung sind auch Filter für Gase oder Flüssigkeiten, Katalysatorträger, Katalysator, Wärmetauscher, Barriereschicht, Gehäusekomponente, Porenbrenner, Membran, Oberflächenbrenner, thermische Isolierung, Elektrode, Heizrohr, Wärmerohr, Verdampfer, Leichtbaustruktur oder Verkleidung zur Abschirmung von Strahlung, insbesondere Elektrosmog, Röntgenwellen oder Radarwellen, die ein erfindungsgemäßes Halbzeug oder einen erfindungsgemäßen Werkstoff enthalten. Die erfindungsgemäßen Halbzeuge eignen sich dabei insbesondere als Vorrichtungen, wie Leichtbaustruktur oder Verkleidungen, zur Abschirmung von Strahlung.

Das Vorteilspotential der vorgelegten Erfindung liegt in der Bereitstellung eines flächigen, homogenen, stabilen und formbaren Metallhalbzeuges, welches aufgrund der Zellstofffasern als Faserarmierung ohne Metallstützstruktur zu anwendungsrelevanten Strukturen überführt werden kann.

Von Vorteil ist ebenso, dass ein derartiges Papier papiertechnologisch wässrig, demnach ohne organische Lösungsmittel, in papierüblichen Umfang und Kostenrahmen hergestellt werden kann.

Vorteilhaft ist, dass die Dicke, Dichte und Mikrostruktur des Metallpapiers exakt eingestellt werden können, was z. B. die exakte Steuerung der Eigenschaften wie z.B. Festigkeit und Mikrostruktur des resultierenden metallischen Werkstoffes im Falle der thermischen Umsetzung erlaubt.

Ebenso von Vorteil ist, dass im Falle der thermischen Umsetzung durch die thermische Zersetzung der Zellstofffasern die Porosität und Mikrostruktur des resultierenden Metallwerkstoffes gesteuert werden kann.

Ebenso vorteilhaft ist, dass das metallangereicherte Papier papiertechnologisch imprägniert (z.B. mittels Leimpresse) und oder papiertechnologisch beschichtet (z.B. Gautschen, Streichen) und oder bedruckt (z.B. Siebdruck) werden kann.

Vorteilhaft ist, dass metallangereichertes Papier mittels papiertechnologischer Formgebung wie zum Beispiel Riffelung (Wellpappenerzeugung) und/oder Wickelung (Wickelhülsenherstellung) aufgrund der Faserarmierung der eingesetzten organischen Fasern wie z.B. Zellstoff gut in anwendungsrelevante Geometrien z.B. Filterstrukturen überführt werden kann.

Ebenso ist es von Vorteil, dass Papiere, welche mit unterschiedlichen Pulvern hinsichtlich Zusammensetzung und oder Partikelgröße gefüllt sind, miteinander kombiniert werden können, um damit z.B. besondere Filtereigenschaften im Falle der thermischen Umsetzung zu erhalten.

Von Vorteil ist ebenfalls die Möglichkeit, neben metallischen Partikeln auch metallische Fasern beim Papierherstellungsprozess zuführen zu können, so dass das metallangereicherte Papier neben metallischen Partikeln auch metallische Fasern beinhalten kann.

Zudem ist es von Vorteil, dass die wässrige Suspension bestehend aus Zellstoff, Metall und organischen Bindern sowie möglichen weiteren Additiven wie zum Beispiel Latex anstelle über einen Papierherstellungsprozess flächig ausgeformt, mittels Spritzguss oder Extrusion neben flächig auch 3-dimensional ausgeformt werden kann.

Von Vorteil ist die Möglichkeit, das metallangereicherte Papier mit einer metallischen Stützstruktur wie zum Beispiel einem Streckmetall verbinden zu können.

Ebenso von Vorteil ist, dass durch den hohen Anteil metallischer Füllstoffe, im Falle deren Sinterfähigkeit, das Papier bzw. die Papierstruktur effektiv thermisch in einen metallischen Werkstoff überführt werden kann.
Figur 1 zeigt ein gewelltes mit Edelstahlpulver gefülltes erfindungsgmäßes Halbzeug.
Figur 2 zeigt den Querschnitt eines mit Edelstahlpulver gefüllten Halbzeugs (Füllstoffgehalt 87 Gew.-%, entspricht rund 50 Vol.-% Feststoffvolumenanteil).
Figur 3 zeigt den Querschnitt eines mit Edelstahlpulver gefüllten Halbzeugs (Füllstoffgehalt 87 Gew.-%, entspricht rund 50 Vol.-% Feststoffvolumenanteil).

### Ausführungsbeispiele :

### Beispiel 1: Halbzeug mit Edelstahl

Es wurde ein Halbzeug aus den folgenden Komponenten hergestellt:
Nadelholzzellstoff ungebleicht (9,97 Massen % bezogen auf Gesamtpapier (atro)),
kationische Maisstärke (0,5 Massen % bezogen auf Gesamtpapier (atro)
Edelstahlpulver (FeCrNiMoMnSi) Ampersint 0717.02; H.C. Starck (87 Gew.-% % bezogen auf Gesamtpapier (atro)),
Latex (anionisch; 2,5 Gew.-% bezogen auf Gesamtpapier (atro)),
kationisches Polyacrylamid; (0,03 Massen % bezogen auf Gesamtpapier (atro)).

Das Edelstahlpulvers Amersint 0717.02 weist folgende Zusammensetzung auf:

| | |
|---|---|
| Cr | 16,5 % |
| Ni | 10,2 % |
| Mo | 2,3 % |
| Mn | 1,4 % |
| Si | 0,4 % |
| C | 0,032 % |
| S | 0,005 % |
| P | < 0,01 % |
| Fe | Rest |

Die Korngrößenverteilung ist:

| | |
|---|---|
| D90 | 12,9 µm |
| D50 | 10,6 µm |
| D10 | 3,4 µm |

### Vorbereitung der Einzelkomponenten:

Zellstoff: Aufschlagen des trockenen Zellstoffs mit ca. 2 Liter Leitungswasser mittels eines Desintegrators (z.B. MK III C Fa. Messmer) für 20 Minuten. Verdünnung der gewonnenen Zellstoffsuspension mit Leitungswasser zu einem Feststoffgehalt von 0,5 %.

kationische Maisstärke: ca.3%ig mit Leitungswasser unter Rühren bei 95°C 60 Minuten Aufkochen, dann mit kaltem Wasser auf ca. 1% verdünnen und 20 Minuten Rühren. Auf Raumtemperatur abkühlen lassen. Feststoffgehalt ermitteln.

Edelstahlpulver: direkt einwiegen.

Latex: Mit Leitungswasser auf einen Feststoffgehalt von 4 % verdünnen.

kationisches Polyacrylamid: mit Leitungswasser unter Rühren auf einen Feststoffgehalt von 0,0226 % verdünnen.

### Herstellung eines Laborblattes

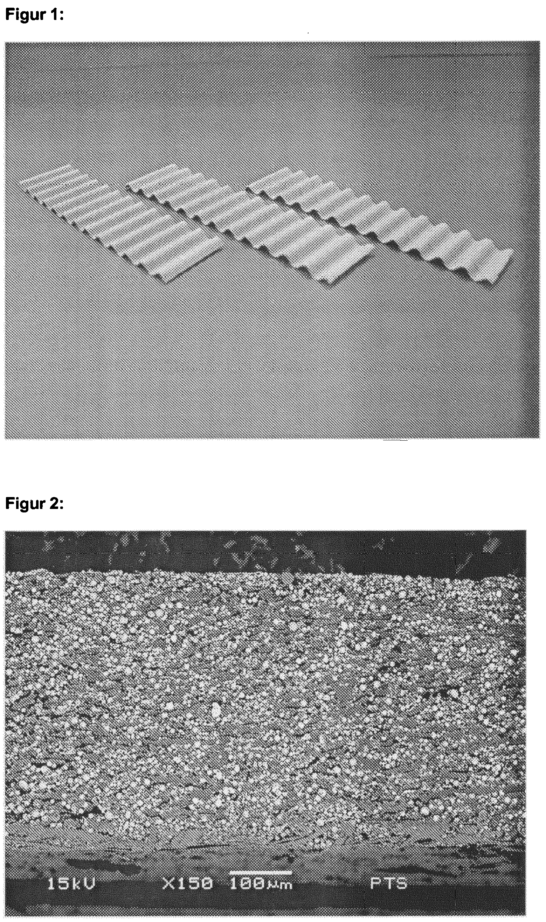

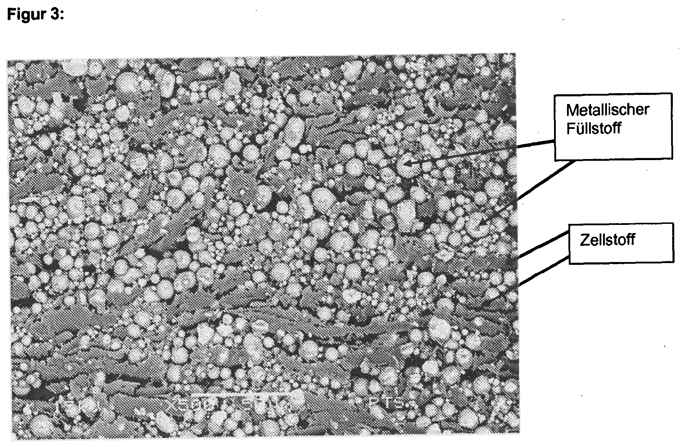

Es wurde ein kreisrundes Laborblatt mit einem Durchmesser von 20 cm und einem Flächengewicht von 318,3 g/m² am Laborblattbildner (z.B. G8 KT Fa. Gockel) nach dem Rapid Köthen Verfahren hergestellt. Dabei werden 202,09 g einer Zellstoffsuspension (Feststoffgehalt 0,5 %) in ein Borosilicat-Becherglas (Fassungsvermögen 600ml) vorgelegt. Unter Rühren bei 700 U/min mittels eines Stativrührers (z.B. IKA RW20 DZM) werden 4,74 g einer kationische Stärkesuspension (Feststoffgehalt 1,06 %) zugegeben. Nach einer Rührzeit von 30 Sekunden erfolgt die Zugabe von 8,7 g Edelstahlpulver. Nach weiterem Rühren für 30 Sekunden werden 6,25 g einer anionischen Latexemulsion (Feststoffgehalt 4 %) hinzugefügt. Nach fortgesetztem Rühren für 1 Minute werden 13,29 g eines kationischen Polyacrylamids (Feststoffgehalt 0,0226 %) zugesetzt und für eine weitere Minute gerührt. Das resultierende Gemisch wird in einen Rapid Köthen Blattbildner verbracht. Das erzeugte Blatt wird für 10 Minuten bei Unterdruck bei 96 °C getrocknet. In den Figuren 2 und 3 sind Querschnitte des Halbzeugs dargestellt. Das Halbzeug weist ein Feststoffvolumenanteil von etwa 50 Vol.-% auf.

Derartig erzeugte Edelstahlpulver gefüllte Papiere wurden mittels Kalander bei einem Liniendruck von 90 KN/m bei 90 °C verdichtet und mittels Riffelaggregat zu einer C-Welle geriffelt. Geriffelte Papierproben wurden im Anschluss in Sauerstoffatmosphäre bei einer Maximaltemperatur von 1000 °C vorgesintert. Hierbei wurde sämtliche organische Komponenten oxidativ entfernt und eine erste Verfestigung der Edelstahlpartikel erreicht. Im Anschluss ist bei Bedarf eine Vollsinterung nach gängigem Verfahren für die Sinterung von Edelstahlpulvern durchzuführen. Hierfür sind Sintertemperaturen im Bereich 1000-1600 °C in Wasserstoffatmosphäre bzw. Edelgasatmosphäre oder Vakuum üblich, wobei die Sinterung zwischen 1000 und 1400°C erfolgte.

### Beispiel 2: Halbzeug mit Eisen

Es wurde ein Halbzeug aus den folgenden Komponenten hergestellt.
Nadelholzzellstoffungebleicht; (9,97 Massen % bezogen auf Gesamtpapier (atro)),
kationische Maisstärke (0,5 Massen % bezogen auf Gesamtpapier (atro)),
Carbonyleisenpulver (Carbonyleisen SQ, Imhoff & Stahl; 87 Gew.-% % bezogen auf Gesamtpapier (atro)),
Latex (anionisch; 2,5 Gew.-% bezogen auf Gesamtpapier (atro)),
Polyacrylamid (kationisch, 0,03 Massen % bezogen auf Gesamtpapier (atro).

Die Vorbereitung der Komponenten und die Papierherstellung erfolgte wie in Beispiel 1. Derartig erzeugte Carbonyleisengefüllte Papiere wurden mittels Kalander bei einem Liniendruck von 90 KN/m bei 90 °C verdichtet und mittels Riffelaggregat zu einer C-Welle geriffelt. Geriffelte Papierproben wurden im Anschluss in Sauerstoffatmosphäre bei einer Maximaltemperatur von 1000 °C vorgesintert. Hierbei wurde sämtliche organische Komponenten oxidativ entfernt und eine erste Verfestigung der Eisenpartikel erreicht. Im Anschluss ist bei Bedarf eine Vollsinterung nach gängigem Verfahren für die Sinterung von Metallen durchzuführen. Hierfür sind Sintertemperaturen im Bereich 1000-1600 °C in Wasserstoffatmosphäre oder Edelgasatmosphäre oder Vakuum üblich., wobei die Sinterung zwischen 1000 und 1400°C erfolgte.

## Patentansprüche

1. Halbzeug, enthaltend
(a) organische Faserstoffe,
(b) Bindemittel,
(c) 15 bis 90 Vol.-% metallische Füllstoffe und
(d) 0 bis 15 Vol.-% nicht metallische anorganische Füllstoffe,
wobei der Gesamtgehalt der Füllstoffe (c) und (d) zusammen nicht mehr als 90 Vol-% des Halbzeugs beträgt, wobei sich alle Volumenangaben auf das Feststoffvolumen des Halbzeugs beziehen, und wobei das Halbzeug mindestens ein Metall der 4., 5. und 6. Periode des Periodensystems enthält, gegebenenfalls in Form von Legierungen oder Gemischen.

2. Halbzeug gemäß Anspruch 1, **dadurch gekennzeichnet, dass** der Gehalt an metallischen Füllstoffen (c) mindestens 45 Vol.-% bezogen auf das Feststoffvolumen des Halbzeugs beträgt und/oder der Gesamtfüllstoffgehalt 45 bis 90 Vol.-% bezogen auf das Feststoffvolumen des Halbzeugs, beträgt.

3. Halbzeug gemäß mindestens einem der vorhergehenden Ansprüche, **dadurch gekennzeichnet, dass** mindestens ein Metall der 4., 5. und 6. Hauptgruppe oder einer Nebengruppe des Periodensystems enthalten ist und/oder dass als nicht metallische anorganische Füllstoffe keramische Füllstoffe, bevorzugt Carbide, Oxide, Nitride und Boride, Hydroxide, besonders bevorzugt Siliziumcarbid, Borcarbid, Titancarbid, Aluminiumoxid, Zirkoniumoxid, Titandioxid, Siliziumnitrid, Silikate, Alumosilikate, Aluminiumnitrid, Bornitrid und Titanborid, und/oder ligno-cellulosehaltige Füllstoffe und/oder Kohlenstoffe, bevorzugt Graphit, Aktivkohle, Ruß, Diamant, Diamantstaub, Fullerenen, Kohlenstoff-Nanotubes oder Kohlenstofffasern verwendet werden.

4. Halbzeug gemäß mindestens einem der vorhergehenden Ansprüche, **dadurch gekennzeichnet, dass** das Metall und/oder die weiteren Füllstoffe als Pulver und/oder Fasern, bevorzugt mit einer Partikelgröße und/oder einem Faserdurchmesser von weniger als 200 µm, besonders bevorzugt von weniger als 100 µm oder von weniger als 50 µm vorliegen.

5. Halbzeug gemäß mindestens einem der vorhergehenden Ansprüche, **dadurch gekennzeichnet, dass** das Halbzeug organische Bindemittel, bevorzugt Phenolharze und oder anorganische Bindemittel bevorzugt silikatische Binder und oder metallorganische Polymere bevorzugt Silane, Siloxane, Silazane und oder Hybridpolymere, enthält, und/oder dass das Halbzeug zusätzlich Benetzungs- und/oder Dispergiermittel, bevorzugt kationische und oder anionisch-stabilisierende Mittel enthält, wobei das Benetzungs- und/oder Dispergiermittel in einer Menge von 0,05 - 5 Gew.-%, insbesondere bevorzugt in einer Menge von 0,1-3 Gew.-%, bezogen auf das trockene Gesamtgewicht des Halbzeugs, vorliegen, und/oder dass das Halbzeug als Retentionsmittel Polyvinylamin, Polyacrylamid, Polyamidamin, Aluminiumsulfat und/oder Bentonit, bevorzugt in einer Menge von 0,01 bis 7 Gew.-%, besonders bevorzugt von 0,1 bis 2 Gew.-%, bezogen auf das trockene Gesamtgewicht des Halbzeugs, enthält.

6. Halbzeug gemäß mindestens einem der vorhergehenden Ansprüche, **dadurch gekennzeichnet, dass** das Halbzeug papiertechnisch geformt vorliegt, bevorzugt als Wellpappe, Waben- oder Rohrstruktur, oder dass das Halbzeug papiertechnisch geformt in Kombination mit einer metallischen Stützstruktur, bevorzugt in Kombination mit einem Streckmetall oder in Kombination mit einem metallischen Fasergewebe vorliegt, bevorzugt als Wellpappe-, Waben- oder Rohrstruktur, und/oder wobei mehrere Schichten zu einem Laminat verbunden sind.

7. Verwendung eines Halbzeugs gemäß einem oder mehreren der vorhergehenden Ansprüche zur Herstellung eines metallischen Werkstoffes.

8. Verfahren zur Herstellung eines Halbzeugs gemäß mindestens einem der vorhergehenden Ansprüche mit den Schritten:
- Vermischen der Faserstoffe (a), Bindemittel (b) und Füllstoffe (c) und (d) in einem Lösungsmittel zu einem Brei;
- Verarbeiten des Breis zu einem Halbzeug unter Verwendung einer Papiermaschine oder eines Extrusion- oder Spritzgußverfahrens.

9. Verfahren zur Herstellung von beschichtetem Halbzeug gemäß einem oder mehreren der Ansprüche 1-6, wobei das Halbzeug mit einem Schlicker beschichtet wird, bevorzugt wobei der Schlicker organische Bindemittel und/oder metallische und/oder keramische und/oder kohlenstoffhaltige und/oder ligno-cellulosehaltige Zusatzstoffe in Form von Pulvern und/oder Fasern umfasst.

10. Verfahren zur Herstellung eines Halbzeugs gemäß einem oder mehreren der vorhergehenden Ansprüche, wobei mindestens zwei Halbzeuge miteinander verbunden werden.

11. Verfahren zur Herstellung eines metallischen Werkstoffes, wobei ein Halbzeug gemäß einem der vorhergehenden Ansprüche so lange erhitzt wird, bis die organischen Bestandteile entfernt sind.

12. Verfahren zur Herstellung eines metallischen Werkstoffes unter Verwendung eines Halbzeugs gemäß mindestens einem der vorhergehenden Ansprüche, **gekennzeichnet durch** mindestens einen der folgenden Schritte:
- Infiltration des Halbzeugs mit organischen Bindemitteln, bevorzugt Phenolharzen, und oder mit einem anorganischen Binder, bevorzugt mit einem silicatischen Binder, mit anschließender thermische Behandlung bei einer Temperatur bis 300 °C, bevorzugt bis 200 °C, oder
- Infiltration des Halbzeugs mit Hybridpolymeren und oder metallorganischen Polymeren, bevorzugt Silanen, Siloxanen oder Silazanen, mit anschließender thermischen Behandlung bei einer Temperatur bis 300 °C, bevorzugt bis 200 °C, mit anschließender Pyrolyse bei einer Temperatur bis 1600 °C, bevorzugt bis 1200 °C und besonders bevorzugt bis 800 °C, oder
- Pyrolyse des Halbzeugs bei einer Temperatur bis 1200 °C, bevorzugt bis 800 °C mit anschließender Sinterung bei einer Temperatur bis 1600 °C, bevorzugt bis 1400 °C, besonders bevorzugt bis 1200 °C, oder bis 1000 °C, oder
- Pyrolyse des Halbzeugs bei einer Temperatur bis 1200 °C, bevorzugt bis 800 °C mit anschließender Sinterung bei einer Temperatur bis 1600 °C, bevorzugt bis 1400 °C, besonders bevorzugt bis 1200 °C oder bis 1000 °C mit anschließender Infiltration mit einem Metall, bevorzugt Aluminium, Kupfer oder Silizium, bei einer Temperatur bis 1600 °C, bevorzugt bis 1400 °C.

13. Metallischer Werkstoff, erhältlich nach einem Verfahren gemäß Anspruch 11 oder 12.

14. Verwendung eines Halbzeugs nach einem der Ansprüche 1 bis 6 oder eines metallischen Werkstoffes gemäß Anspruch 13 als Filter für Gase oder Flüssigkeiten, als Katalysatorträger, Katalysator, Wärmetauscher, Barriereschicht, Gehäusekomponente, Porenbrenner, Membran, Oberflächenbrenner, thermische Isolierung, Elektrode, Heizrohr, Wärmerohr, Verdampfer, Leichtbaustruktur oder zur Abschirmung von Strahlung, insbesondere Elektrosmog, Röntgenwellen oder Radarwellen.

15. Filter für Gase oder Flüssigkeiten, Katalysatorträger, Katalysator, Wärmetauscher, Barriereschicht, Gehäusekomponente, Porenbrenner, Membran, Oberflächenbrenner, thermische Isolierung, Elektrode, Heizrohr, Wärmerohr, Verdampfer, Leichtbaustruktur oder Verkleidung zur Abschirmung von Strahlung, insbesondere Elektrosmog, Röntgenwellen oder Radarwellen, enthaltend ein Halbzeug nach einem der Ansprüche 1 bis 6 oder einen Werkstoff nach Anspruch 13.

## Claims

1. Semi-finished product, comprising:
(a) organic fibrous materials;
(b) binders;
(c) 15 to 90% by volume metal fillers; and
(d) 0 to 15% by volume non-metal inorganic fillers,
wherein total content of the fillers (c) and (d) together not being more than 90% by volume of the semi-finished product, wherein all volumes being given based on the solids volume of the semi-finished product, and wherein said semi-finished product comprises at least one metal from the 4th, 5th and 6th period of the periodic table, optionally in the form of alloys or mixtures.

2. The semi-finished product according to claim 1, **characterized in that** the content of metal fillers (c) is at least 45% by volume based on the solids volume of the semi-finished product and/or the total filler content is 45 to 90% by volume based on the solids volume of the semi-finished product.

3. The semi-finished product according to at least one of the preceding claims, **characterized in that** at least one metal from the 4th, 5th and 6th main groups or a transition group of the periodic table is contained, and/or **in that** ceramic fillers, preferably carbides, oxides, nitrides, and borides, hydroxides, particularly preferably silicon carbide, boron carbide, titanium carbide, aluminum oxide, zirconium oxide, titanium dioxide, silicon nitride, silicates, aluminosilicates, aluminum nitride, boron nitride and titanium boride, and/or lignocellulose-containing fillers, and/or carbons, preferably graphite, activated carbon, soot, diamond, diamond powder, fullerenes, carbon nanotubes or carbon fibers, are used as non-metal inorganic fillers.

4. The semi-finished product according to at least one of the preceding claims, **characterized in that** the metal and/or the further fillers are in the form of powders and/or fibers, preferably having a particle size and/or fiber diameter of less than 200 µm, particularly preferably of less than 100 µm or less than 50 µm.

5. The semi-finished product according to at least one of the preceding claims, **characterized in that** the semi-finished product comprises organic binders, preferably phenol resins, and/or inorganic binders, preferably siliceous binders, and/or organometallic polymers, preferably silanes, siloxanes, silazanes and/or hybrid polymers and/or **in that** the semi-finished product additionally comprises wetting agents and/or dispersing agents, preferably cationic and/or anionically stabilizing agents, wherein the wetting and/or dispersing agent is comprised in an amount of 0.05 to 5% by weight, particularly preferably in an amount of 0.1 to 3% by weight, based on the total dry weight of the semi-finished product, and/or **in that** the semi-finished product comprises polyvinyl amine, polyacrylamide, polyamide amine, aluminum sulphate and/or bentonite, preferably in an amount of 0.01 to 7% by weight, particularly preferably in an amount of 0.1 to 2% by weight, based on the total dry mass of the semi-finished product, as retention agents.

6. The semi-finished product according to at least one of the preceding claims, **characterized in that** the semi-finished product is shaped using paper technology, preferably as a corrugated board, honeycomb or tubular structure, or **in that** the semi-finished product is shaped using paper technology in combination with a metal support structure, preferably in combination with an expanded metal or in combination with a metal fiber woven fabric, preferably as a corrugated board, honeycomb or tubular structure, and/or **in that** a plurality of layers are connected to form a laminate.

7. Use of a semi-finished product according to one or more of the preceding claims for manufacturing a metallic material.

8. Process for manufacturing a semi-finished product according to at least one of the preceding claims, comprising the steps of:
- mixing the fibrous materials (a), binders (b) and fillers (c) and (d) in a solvent to form a paste;
- processing the paste to form a semi-finished product using a paper machine or an extrusion or injection molding process.

9. Process for manufacturing a coated semi-finished product according to one or more of one or more of claims 1-6, wherein the semi-finished product is coated with a slip, preferably wherein the slip comprises organic binders and/or metallic and/or ceramic and/or carbon-containing and/or lignocellulose-containing additives in the form of powders and/or fibers.

10. Process for manufacturing a semi-finished product according to one or more of the preceding claims, wherein at least two semi-finished products are connected together.

11. Process for manufacturing a metallic material, wherein a semi-finished product according to one of the preceding claims is heated until the organic components are removed.

12. Process for manufacturing a metallic material using a semi-finished product according to at least one of the preceding claims, **characterized by** at least one of the following steps:
- infiltrating the semi-finished product with organic binders, preferably phenol resins, and/or with an inorganic binder, preferably with a siliceous binder, with subsequent heat-treatment at a temperature of up to 300 °C, preferably up to 200 °C, or
- infiltrating the semi-finished product with hybrid polymers and/or organometallic polymers, preferably silanes, siloxanes or silazanes, with subsequent heat-treatment at a temperature of up to 300 °C, preferably up to 200 °C, with subsequent pyrolysis at a temperature of up to 1600 °C, preferably up to 1200 °C, and particularly preferably up to 800 °C, or
- pyrolysis of the semi-finished product at a temperature of up to 1200 °C, preferably up to 800 °C, with subsequent sintering at a temperature of up to 1600 °C, preferably up to 1400 °C, particularly preferably up to 1200 °C, or up to 1000 °C, or
- pyrolysis of the semi-finished product at a temperature of up to 1200 °C, preferably up to 800 °C, with subsequent sintering at a temperature of up to 1600 °C, preferably up to 1400 °C, particularly preferably up to 1200 °C, or up to 1000 °C, with subsequent infiltration with a metal, preferably aluminium, copper or silicon, at a temperature of up to 1600 °C, preferably up to 1400 °C.

13. Metallic material, obtainable by the process according to claim 11 or 12.

14. Use of a semi-finished product according to one of claims 1-6 or a metallic material according to claim 13 as a filter for gases or liquids, as a catalyst support, catalytic convertor, heat exchanger, barrier layer, housing component, pore burner, membrane, surface burner, thermal insulation, electrode, fire tube, heat pipe, evaporator, light-weight structure, or for shielding from radiation, in particular electrosmog, X-ray waves or radar waves.

15. Filter for gases or liquids, catalyst support, catalytic convertor, heat exchanger, barrier layer, housing component, pore burner, membrane, surface burner, thermal insulation, electrode, fire tube, heat pipe, evaporator, light-weight structure, or cladding for shielding of radiation, in particular electrosmog, X-ray waves or radar waves, containing a semi-finished product according to one of claims 1-6 or a material according to claim 13.

## Revendications

1. Produit semi-fini, comprenant :
(a) des substances fibreuses organiques,
(b) un liant,
(c) 15 à 90 % en volume de charges métalliques et
(d) 0 à 15 % en volume de charges non métalliques inorganiques,
dans lequel la teneur totale en charges (c) et (d) ensemble n'est pas supérieure à 90 % en volume du produit semi-fini, dans lequel toutes les indications en volumes se rapportent au volume des matières solides du produit semi-fini, et dans lequel le produit semi-fini comprend au moins un métal des 4ème, 5ème ou 6ème périodes du système périodique, éventuellement sous la forme d'alliages ou de mélanges.

2. Produit semi-fini selon la revendication 1, **caractérisé en ce que** la teneur en charges métalliques (c) s'élève à au moins 45 % en volume par rapport au volume des matières solides du produit semi-fini et/ou la teneur totale en charges est de 45 à 90 % en volume par rapport au volume des matières solides du produit semi-fini.

3. Produit semi-fini selon au moins l'une des revendications précédentes, **caractérisé en ce qu'**au moins un métal des 4ème, 5ème, et 6ème groupes principaux ou d'un sous-groupe du système périodique est compris et/ou, qu'en tant que charges non métalliques inorganiques, des charges à base de céramiques, de préférence des carbures, des oxydes, des nitrures et des borures, des hydroxydes, de manière particulièrement préférée, du carbure de silicium, du carbure de bore, du carbure de titane, de l'oxyde d'aluminium, de l'oxyde de zirconium, de l'oxyde de titane, du nitrure de silicium, des silicates, des alumino silicates, du nitrure d'aluminium, du nitrure de bore et du borure de titane, et/ou des charges comprenant de la ligno-cellulose et/ou des produits carbonés, de préférence, du graphite, du charbon actif, de la suie, du diamant, de la poudre de diamant, des fullerènes, des nanotubes de carbone ou des fibres de carbone sont employées.

4. Produit semi-fini selon au moins l'une des revendications précédentes, **caractérisé en ce que** le métal et/ou les autres charges se présentent sous la forme de poudre et/ou de fibres, de préférence avec une taille de particule et/ou un diamètre de fibre de moins de 240 µm, de manière particulièrement préférée de moins de 100 µm ou de moins de 50 µm.

5. Produit semi-fini selon au moins l'une des revendications précédentes, **caractérisé en ce que** le produit semi-fini comprend des liants organiques, de préférence des résines phénoliques, et ou des liants inorganiques, de préférence, des liants silicatés et ou des polymères métallo-organiques, de préférence des silanes, des siloxanes, des silazanes et ou polymères hydrures, et/ou que le produit semi-fini comprend en complément des produits mouillants et/ou dispersants, de préférence des produits stabilisants cationiques et ou anioniques, où les produits mouillants et/ou dispersants sont présents en une quantité de 0,05 à 5 % en poids, de manière particulièrement préférée en une quantité de 0,1 à 3 % en poids par rapport au poids total sec du produit semi-fini, et/ou que le produit semi-fini comprend en tant que produit de rétention une polyvinylamine, un polyacrylamide, un polyamidamine, du sulfate d'aluminium et/ou de la bentonite, de préférence en une quantité de 0,01 à 7 % en poids, de manière particulièrement préférée, de 0,1 à 2 % en poids, par rapport au poids sec total du produit semi-fini.

6. Produit semi-fini selon au moins l'une des revendications précédentes, **caractérisé en ce que** le produit semi-fini se présente sous une forme de la technique de l'industrie papetière, de préférence, de carton ondulé, d'une structure alvéolaire ou une structure tubulaire, ou que le produit semi-fini est formé selon une technique de l'industrie papetière en combinaison avec une structure de support métallique, de préférence en combinaison avec un métal déployé ou en combinaison avec un tissu en fibres métalliques, de préférence sous forme de carton ondulé, d'une structure alvéolaire ou d'une structure tubulaire, et/ou dans lequel plusieurs couches sont reliées pour former un stratifié.

7. Utilisation d'un produit semi-fini selon une ou plusieurs parmi les revendications précédentes, pour la fabrication d'un matériau métallique.

8. Procédé de fabrication d'un produit semi-fini selon au moins l'une des revendications précédentes, avec les étapes :
- de mélange des substances fibreuses (a), du liant (b) et des charges (e) et (d) dans un solvant pour former une bouillie ;
- de façonnage de la bouillie en un produit semi-fini, moyennant l'utilisation d'une machine à papier ou d'un procédé d'extrusion ou de moulage par injection.

9. Procédé de fabrication d'un produit semi-fini revêtu selon l'une ou plusieurs parmi les revendications 1 à 6, dans lequel le produit semi-fini est revêtu par une barbotine, de préférence dans lequel la barbotine comprend des liants organiques et/ou des additifs métalliques et/ou céramiques et/ou comprenant du carbone et/ou comprenant de la lignocellulose, sous la forme de poudres et/ou de fibres.

10. Procédé de fabrication d'un produit semi-fini selon l'une ou plusieurs parmi les revendications précédentes, dans lequel au moins deux produits semi-finis sont reliés entre eux.

11. Procédé de fabrication d'un matériau métallique, dans lequel un produit semi-fini selon l'une des revendications précédentes est chauffé aussi longtemps jusqu'à ce que les constituants organiques soient enlevés.

12. Procédé de fabrication d'un matériau métallique, moyennant l'emploi d'un produit semi-fini selon au moins l'une des revendications précédentes, **caractérisé par** au moins l'une des étapes suivantes :
- infiltration dans le produit semi-fini de liants organiques, de préférence, des résines phénoliques, et ou d'un liant inorganique, de préférence d'un liant silicaté, avec un traitement thermique subséquent à une température jusqu'à 300 °C, de préférence jusqu'à 200 °C, ou
- infiltration dans le produit semi-fini de polymères hydrures et ou de polymères métallo-organiques, de préférence des silanes, des siloxanes ou des silazanes, avec un traitement thermique subséquent à une température jusqu'à 300 °C, de préférence jusqu'à 200 °C, avec une pyrolyse subséquente à une température jusqu'à 1600 °C, de préférence, jusqu'à 1200 °C et de manière particulièrement préférée, jusqu'à 800 °C, ou
- pyrolyse du produit semi-fini à une température jusqu'à 1200 °C, de préférence jusqu'à 800 °C, avec un ressuage subséquent à une température jusqu'à 1600 °C, de préférence jusqu'à 1400 °C, de manière particulièrement préférée jusqu'à 1200 °C, ou jusqu'à 1000 °C, ou
- pyrolyse du produit semi-fini à une température jusqu'à 1200 °C, de préférence jusqu'à 800 °C, avec un ressuage subséquent à une température jusqu'à 1600 °C, de préférence jusqu'à 1400 °C, de manière particulièrement préférée jusqu'à 1240 °C ou jusqu'à 1000 °C avec une infiltration subséquente d'un métal, de préférence de l'aluminium, du cuivre ou du silicium à une température jusqu'à 1600 °C, de préférence jusqu'à 1400 °C.

13. Matériau métallique, pouvant être obtenu selon un procédé selon les revendications 11 ou 12.

14. Utilisation d'un produit semi-fini selon l'une des revendications 1 à 6 ou d'un matériau métallique selon la revendication 13 en tant que filtre pour des gaz ou des liquides, en tant que support de catalyseur, catalyseur, échangeur de chaleur, couche faisant barrière, composant de boîtier, brûleur à corps poreux, membrane, brûleur de surface, isolation thermique, électrode, tube chauffant, tube de chauffage, évaporateur, structure de construction légère ou pour une protection contre le rayonnement, en particulier contre la pollution électromagnétique, les rayons X ou les ondes radio.

15. Filtre pour des gaz ou des liquides, support de catalyseur, catalyseur, échangeur de chaleur, couche faisant barrière, composant de boîtier, brûleur à corps poreux, membrane, brûleur de surface, isolation thermique, électrode, tube chauffant, tube de chauffage, évaporateur, structure de construction légère ou pour une protection contre le rayonnement, en particulier contre la pollution électromagnétique, les rayons X ou les ondes radio, comprenant un produit semi-fini selon l'une des revendications 1 à 6 ou un matériau selon la revendication 13.
